# EUROPÄISCHE PATENTSCHRIFT

(11) **EP 0 364 751 B1**
(45) Veröffentlichungstag und Bekanntmachung des Hinweises auf die Patenterteilung: **20.04.1994**
(21) Anmeldenummer: 89117364.3
(22) Anmeldetag: 20.09.1989
(51) Int. Cl.: A01B 15/14

(54) **Verfahren und Vorrichtung zur Regelung der Lage des Zugpunktes eines einen Schlepper und einen Pflug umfassenden Gespanns**
Traction point position control method and device for a tractor with a plough
Méthode et dispositif pour contrôler la position du point de traction d'un tracteur avec charrue

(30) Priorität: 21.10.1988 DE 3835812
(43) Veröffentlichungstag der Anmeldung: 25.04.1990
(73) Patentinhaber: Rabewerk GmbH + Co., 49152 Bad Essen (DE)
(72) Erfinder: Reker, Stefan, Dipl.-Ing., D-4508 Bohmte 1 (DE)
(74) Vertreter: Missling, Arne, Dipl.-Ing.

(56) Entgegenhaltungen:
- EP-A- 0 198 405
- AT-B- 381 829
- DD-A- 221 554
- DE-A- 2 845 111
- DE-A- 3 248 633
- DE-A- 3 523 748
- DE-A- 3 523 775
- DE-A- 3 601 465
- DE-A- 3 611 414
- DE-B- 1 168 148
- DE-C- 3 345 231
- GB-A- 2 172 486

## Beschreibung

Die Erfindung bezieht sich auf eine Vorrichtung bzw. ein Verfahren zur Regelung der Lage des Zugpunktes eines einen Schlepper und einen Pflug umfassenden Gespanns nach dem Oberbegriff des Anspruchs 1 bzw. 15.

Während eines Pflugvorganges treten durch die Anlage des Pflugkörpers an einer Furche des Ackerbodens erhebliche Kräfte auf, welche auf den Pflug einwirken und dazu führen, daß der Zugpunkt (in der Draufsicht betrachtet) verlagert wird, bzw. der Schlepper möglicherweise aus der Spur läuft. Um derartige Beeinflussungen auszuschließen und um in gewissem Maße eine gleichmäßige Lage des Zugpunktes sicherzustellen, ist aus der DE-C 33 45 231 ein Regelverfahren bekannt, bei welchem, ausgehend von einem vorgegebenen Winkel der Vorderräder eines Schleppers Lageabweichungen durch eine Veränderung des Einstellwinkels der Vorderräder ausgeglichen werden sollen. Bei diesem Verfahren erweist es sich als nachteilig, daß, in Abhängigkeit von den Bodenverhältnissen und der Hangneigung des zu bearbeitenden Feldes der Schlepper möglicherweise kaum noch steuerbar ist und, bedingt durch das starke Gegensteuern ein erheblicher Energieaufwand erforderlich ist. Gemäß dieser Patentschrift wird als Regelgröße das Verhältnis der an den Unterlenkern eines Dreipunktturmes auftretenden Kräfte verwendet, wobei der Fahrer bemüht sein sollte, für dieses Kräfteverhältnis einen bestimmten Wert zu erreichen. Darin liegt jedoch ein weiterer Nachteil dieses Verfahrens, da ein konstanter Wert des Verhältnisses der Kräfte an den Unterlenkern bei der praktischen Durchführung eines Pflügevorganges nicht realisierbar ist. Insbesondere beim Übergang von einer Ebene zu einer hängigen Stelle, an welcher hangauf gepflügt wird, ist es erforderlich, daß der Pflug genau so breit schneidet, wie in der Ebene, wobei der Schlepper in der gleichen Stellung zur Furchenkante bleiben muß, wie in der Ebene. Dabei wird jedoch der Pflug keine andere Lage relativ zu dem Schlepper eingenommen haben, als bei einem Pflugvorgang in der Ebene. Bedingt durch die Messung der Kräfte an den Unterlenkern wird die Regelvorrichtung jedoch bemüht sein, die seitliche, durch die hängige Lage auftretende Komponente der Bodenkräfte zu kompensieren, d.h. den Zugpunkt weiter hangauf zu verlagern. Unter Berücksichtigungen der Richtungen der Lenkerkräfte beziehungsweise der Lage des Zugpunktes und der Zuglinie des Gespannes ergibt sich, daß die Kraft, welche an dem hangoberen Lenker auftritt, größer ist als die Kraft des hangunten angeordneten Unterlenkers. Es verändert sich somit das Kräfteverhältnis in den Lenkern, obwohl sich der Kraftangriffspunkt an den Pflugkörpern nicht geändert hat. Dies führt somit zwangsläufig zu einem unerwünschten Fehlverhalten der Regelungsvorrichtung.

Ein weiterer Nachteil dieses Verfahrens bzw. der dafür vorgesehenen Vorrichtung besteht darin, daß auch dann, wenn die Unterlenker bzw. die Anhängepunkte der Unterlenker am Schlepper mit Sensoren versehen sind, die gesamte Einrichtung stark auf Lenkkorrekturen reagiert, so daß im Endeffekt im wesentlichen nur eine Geradeausfahrt möglich erscheint.

Aus der DE-A 35 23 748 ist ein Anbaupflug mit Steuerzugpunkteinstellung bekannt, bei welchem an den hinteren Anlenkpunkten der unteren Lenker jeweils Sensoren vorgesehen sind. Dieser Pflug weist den Nachteil auf, daß der Pflugrahmen selbst verstellt wird, so daß keine separate Änderung der Zugpunktlage sondern zugleich eine Verstellung der Schnittbreite erfolgt.

Die DE-A 28 45 111, DE-B 11 68 148 und DE-A 32 48 633 zeigen jeweils Vorrichtungen zur Verstellung der Schnittbreite und der Lage des Zugpunktes. Diese Vorrichtungen gestatten eine entsprechende Einstellung durch manuelle Betätigung.

Der Erfindung liegt die Aufgabe zugrunde, eine Vorrichtung und ein Verfahren der eingangs genannten Art zu schaffen, welche bei einfachem Aufbau und hoher Betriebssicherheit eine die Anlagenreibung reduzierende bzw. minimierende und Energiekosten sparende Einstellung des Pfluges ermöglichen und ein Arbeiten mit der jeweils günstigsten Zugkraft sicher stellen.

Erfindungsgemäß wird hinsichtlich der Vorrichtung die Aufgabe mit den Merkmalen des Anspruchs 1 gelöst.

Die erfindungsgemäße Vorrichtung zeichnet sich durch eine Reihe erheblicher Vorteile aus. Da erfindungsgemäß nicht Kräfte in Lenkern, sondern direkt die Anlagekraft des Pflugkörpers an der Furchenwand gemessen wird, ist es möglich, sonstige Krafteinflüsse auszuschließen, welche zu einer Verfälschung des aufgenommenen Meßwertes und zu einer Fehlregelung führen können. Erfindungsgemäß ist es somit möglich, die Anlagekraft so vorzuwählen, daß gerade eine einwandfreie Führung des Pflugkörpers, bevorzugterweise des hinteren Pflugkörpers eines Pfluges, welcher mit mehreren Pflugkörpern versehen ist, und somit des gesamten Pfluges an der Furchenwand gewährleistet ist.

Bei einem Pflug, welcher mit mindestens drei Pflugkörpern bestückt ist, ist es erfindungsgemäß vorteilhaft, wenn der Sensor im Bereich des hinteren an einen Pflugrahmen gelagerten Pflugkörpers angeordnet ist. Es ist damit sicher gestellt, daß auch bei einem derartigen Pflug eine exakte Regelung ermöglicht wird. Demgegenüber ist bei einem Pflug, welcher gemäß dem eingangs genannten Patent 33 45 231 ausgebildet ist, die Differenz der an den Unterlenkern wirkenden Kräfte nicht so groß, daß eine exakte, unterschiedliche Ackerverhältnisse berücksichtigende Regelung möglich ist.

Erfindungsgemäß ist es möglich, ausgehend von der Anlagenkraft, eine Kraftkomponente zu messen, welche in einem Bereich von nahezu 0 bis zu mehr als der seitlichen Komponente der Bodenkräfte am hintersten Pflugkörper liegt. Bedingt durch diesen sehr großen zur Verfügung stehenden Wertebereich ist somit eine ausgesprochen exakte und einfache Regelbarkeit möglich.

In einer weiteren günstigen Ausgestaltung der erfindungsgemäßen Vorrichtung ist vorgesehen, daß der Sensor in Form eines Drucksensors ausgebildet ist, welcher im Bereich zwischen einer Anlage und einer Pflugkörperbrust angeordnet ist. Diese Ausgestaltungsform erweist sich als besonders günstig, da üblicherweise konstruktiv bereits vorhandene Befestigungspunkte, beispielsweise Schrauben oder Bolzenverbindungen vorgesehen sind, im Bereich derer ein Drucksensor, beispielsweise in Form einer Piezo-Druckmeßdose angeordnet werden kann. Weiterhin ist es bei dieser Art der Ausgestaltung und Anordnung eines Sensors besonders einfach möglich, eine Einstellung des Sensors beziehungsweise eine Eichung durchzuführen, da nur geeignete Befestigungselemente angezogen oder gelockert werden müssen. Möglich ist es jedoch auch mit Hilfe einer elektronischen Regeleinrichtung die Eichung durchzuführen.

In einer anderen Ausgestaltungsform ist es erfindungsgemäß auch möglich, den Sensor in Form eines Dehnungsmeßsensors an einer Anlage des Pflugkörpers auszubilden, wobei dabei berücksichtigt wird, daß die Anlage des Pflugkörpers durch die auftretenden Kipp- und Biegemomente in Abhängigkeit von der Anlagekraft, welche auf den Pflugkörper wirkt, verformt wird.

Erfindungsgemäß ist es auch möglich, den Sensor am Grindel eines Pflugkörpers anzuordnen und ebenfalls in Form eines Dehnungsmeßsensors, bestehend aus Dehnungsmeßstreifen, auszubilden. Bei dieser Ausgestaltung wird ebenfalls die Tatsache ausgenützt, daß sich die Grindel in Abhängigkeit von der Anlagekraft auf den Pflugkörper verformt, so daß auf diese Weise eine direkte Bestimmung der auf den Pflugkörper selbst wirkenden Kraft möglich ist.

Alternativ dazu kann es sich auch als günstig erweisen, den Sensor am Verbindungsbereich eines mehrteiligen Grindels eines Pflugkörpers anzuordnen. Der Grindel kann beispielsweise durch Verschraubung mehrerer Teile zusammengesetzt sein, so daß es möglich ist , den Sensor im Verschraubungsbereich, d.h. im Bereich von Zapfen oder Bolzen anzuordnen. Dabei kann es sowohl möglich sein, die Verformung der Grindel, als auch die Torsion oder Verformung eines Zapfens zu ermitteln.

Weiterhin kann es möglich sein, den Grindel gelenkig, d.h. mit einem gelenkigen Bereich auszubilden und den Sensor an diesem gelenkigen Bereich anzuordnen. Beispielsweise kann das Gelenk mittels einer Feder in einer bestimmten Vorspannlage gehalten werden, wobei die Feder oder das Federelement mit dem Sensor verbunden sein können.

Eine weitere günstige Ausgestaltungsform der erfindungsgemäßen Vorrichtung ist dadurch gegeben, daß der Sensor im Befestigungsbereich eines Grindels eines Pflugkörpers an einer Anlagefläche angeordnet ist. Beispielsweise ist der Grindel an einer Konsole verschraubt, wobei entweder der Grindel oder die Konsole bei einer Kraftbeaufschlagung des Pflugkörpers auf Biegung belastet wird. Weiterhin ist es möglich, Zug- oder Torsionsbelastungen von Befestigungselementen, welche zur Befestigung der Grindel an der Konsole dienen, festzustellen, um auf diese Weise die Anlagekraft des Pflugkörpers zu bestimmen.

Erfindungsgemäß ist es somit möglich, die Sensoren im weiteren Bereich der jeweiligen Pflugschar oder des Pflugkörpers anzuordnen, es ist nicht in jedem Falle erforderlich, die Anlagekraft in direkter Zuordnung an den Pflugkörper festzustellen. Es ergibt sich erfindungsgemäß somit die Möglichkeit, besonders günstige Anbringungspunkte der Sensoren auszuwählen, welche insbesondere im Hinblick auf die während des Pflügens auftretenden Belastungen und Beschädigungen unempfindlich sind. Weiterhin ist es erfindungsgemäß möglich, die Pflugkörper im Bedarfsfall auszuwechseln oder zu reparieren, ohne daß dadurch die Meßwertaufnehmer in Mitleidenschaft gezogen werden.

Bei einer Anordnung des Sensors in einem Bereich, welcher nicht direkt einem Pflugkörper zugeordnet ist, läßt sich selbstverständlich die Anlagekraft nicht direkt messen, vielmehr ist eine Kraft bzw. Spannung meßbar, welche von der seitlichen Komponente der resultierenden Kraft, der auf den Pflugkörper einwirkenden Kräfte abhängt. Die somit gemessenen Kräftedifferenzen können in einfacher Weise in der Regelungseinrichtung umgewandelt werden, so daß die Anlagekraft selbst als Ausgangsgröße zur Verfügung steht.

Erfindungsgemäß ist es weiterhin möglich, die Kräfte nicht an dem hintersten Pflugkörper, sondern, beispielsweise bei einem Pflug mit drei Pflugkörpern, am mittleren Pflugkörper zu messen. Auch hier ist es möglich, Differenzkräfte oder zusammengesetzte Kraftkomponenten zu ermitteln und aus diesen die Anlagekraft zu bestimmen.

Erfindungsgemäß ist es somit möglich, die Anlagekraft zu bestimmen und auf einen konstanten Wert einzuregulieren, wobei dies durch eine Verstellung des Zugpunktes erfolgt, sowie dies nachfolgend im einzelnen beschrieben werden wird.

Weiterhin ist es erfindungsgemäß möglich, den Sollwert der Anlagekraft den jeweiligen Anforderungen anzupassen, beispielsweise der Arbeitstiefe, der Bodenbeschaffenheit, der Hangneigung oder ähnlichem. Die Anpassung kann in einfacher Weise durch den Fahrer des Schleppers erfolgen.

Hinsichtlich der oben genannten Möglichkeiten. die Kraftaufnahme entweder am hintersten Pflugkörper oder an einem mittleren Pflugkörper vorzunehmen, ist zu erwähnen, daß insbesondere bei einer Anordnung des Sensors an einen Grindel oder ähnlichem dahingestellt bleiben kann, ob dies an dem hintersten oder einem mittleren Pflugkörper erfolgt. In beiden Fällen ist es möglich, die somit gemessenen Differenzkräfte oder zusammengesetzten Kraftkomponenten in einfacher Weise umzurechnen, um die exakte Größe der Anlagekraft festzustellen.

Weiterhin kann es sich als besonders günstig erweisen, zusätzlich einen Sensor vorzusehen, welcher die Hangneigung mißt. Dieser Sensor kann entweder am Pflug oder am Schlepper vorgesehen sein und wird bevorzugterweise so mit der Regelungseinheit verbunden, daß diese eine entsprechende Anpassung des Sollwerts der Anlagekraft vornehmen kann, ohne daß dazu die Bedienungsperson manuell in das Regelverfahren eingreifen muß.

Bevorzugterweise erfolgt die Einstellung der Lage des Zugpunktes mittels zumindest eines den Pflugrahmen mit einer Anbauvorrichtung verbindenden, längenveränderbaren Lenkers. Diese Art der Einstellung zeichnet sich durch ein hohes Maß an mechanischer Robustheit aus und ist besonders störungsunanfällig, so daß sicher gestellt ist, daß der Zugpunkt jeweils in geeigneter Weise einjustiert werden kann.

Um sicher zu stellen, daß der Zugpunkt im wesentlichen unabhängig von der Schnittbreite des Pfluges eingestellt werden kann, kann vorgesehen sein, daß die Einstellung der Schnittbreite mittels einer im Bereich der Lagerung des Pfluges an dem Schlepper angeordneten Kulisse erfolgt. Eine Verstellung der Lage des Zugpunktes durch die Regelung führt somit nicht zu einer Veränderung der Schnittbreite und kann unabhängig von dieser erfolgen.

Bevorzugterweise erfolgt die Einstellung über Hydraulikzylinder, da diese auf besonders einfache Weise über eine elektronische Regelung ansteuer- und betätigbar sind.

Bevorzugterweise erfolgt die Einstellung der Lage des Zugpunktes auf einen vorgegebenen Sollwert mittels der Regelungseinrichtung vollautomatisch, so daß die Bedienungsperson bei einmal erfolgter Anpassung des Pfluges an den Schlepper keine weiteren Betätigungsvorgänge durchführen muß.

In einer anderen, ebenfalls vorteilhaften Ausgestaltungsform der Erfindung kann vorgesehen sein, daß die Lage des Zugpunktes am Führerstand des Schleppers mittels einer Anzeigeeinrichtung angezeigt wird. Die Bedienungsperson kann dann ermitteln, in welchem Anlage- Kraftbereich der Pflug arbeitet, um erforderlichenfalls manuell entsprechende Änderungen vorzunehmen, beispielsweise durch Änderung des Lenkeinschlags der Vorderräder des Schleppers oder ähnliches oder Beeinflussung der Regeleinrichtung.

Die Erfindung kann sowohl beim Beetpflug wie auch Drehpflug eingesetzt werden. Bei Drehpflügen muß dafür gesorgt werden, daß für die Regelungseinrichtung ein wirksamer Drehsensor für jede Arbeitsrichtung zur Verfügung steht. Im einfachsten Fall hat der rechte wie auch linke Pflugkörper einen eigenen Sensor, die wahlweise zum Einsatz kommen.

Hinsichtlich der Einstellung der Zugpunktlage und der Schnittbreite ist es erfindungsgemäß möglich, dafür jeweils einen separaten Hydraulikzylinder vorzusehen, wobei die Abstimmung der beiden Hydraulikzylinder aufeinander elektronisch oder mechanisch erfolgen kann, im letzteren Falle beispielsweise durch geeignete Zylinderquerschnitte. Es ist jedoch auch möglich, die Anpassung mittels eines in den Schleppercomputer eingegebenen Programms vorzunehmen.

Was die Anlenkung des Pflugrahmens am Pflugvordergestell betrifft, so wird vorteilhaft eine Lenkeranordnung mit zwei Lenkern gewählt, die so angeordnet sind, daß sich deren Verlängerungen im oder in der Nähe des Zugpunktes schneiden. Hierdurch wird eine Beeinflussung der Schnittbreite bei Veränderung der Pollage vermieden.

Hinsichtlich des Verfahrens wird die Erfindung dadurch gelöst, daß die im Bereich eines Pflugkörpers gemessene Anlagekraft durch Verstellung der in der Draufsicht verstellbaren Lage des Zugpunktes des Pflugs konstant auf einem vorgegebenen Wert gehalten wird. Änderungen in der Bodenstruktur oder in der Geometrie des Geländes führen somit nicht zu einer Erhöhung der Anlagekraft und zu einer Verschlechterung des Wirkungsgrades des Schleppers bzw. zu einem höheren Energieaufwand.

In einer bevorzugten Ausgestaltung des Verfahrens wird die Anlagekraft des Pfluges gegen eine Furche direkt gemessen, es ist jedoch auch möglich, die Anlagekraft eines Pfluges gegen eine Furche aus der Seitenkomponente der an dem Pflugkörper auftretenden Kräfte zu bestimmen. Es ist erfindungsgemäß somit möglich, entweder am hintersten Pflugkörper die Anlagekraft direkt zu messen, oder aber an dem hintersten Pflugkörper oder an einem mittleren Pflugkörper die insgesamt auftretenden Kräfte festzustellen und / oder zusätzlich an einem weiteren Pflugkörper die Anlagekraft separat zu messen. Aus der somit vorliegenden Kraftdifferenz ist es möglich, direkt die Anlagekraft zu bestimmen. Weiterhin ist es erfindungsgemäß möglich, Spannungen im Bereich des Grindels sowohl bei dem hintersten Pflugkörper als auch bei einem anderen Pflugkörper zu messen und zu vergleichen, um eine entsprechende Änderung der Regelung vorzunehmen.

In einer Abwandlung des erfindungsgemäßen Verfahrens kann die Ermittlung der Anlagekraft auch so erfolgen, daß eine wesentliche Änderung der an dem Pflugkörper auftretenden Kräfte ermittelt wird, welche beispielsweise dann auftreten kann, wenn der Pflug relativ zu dem Schlepper seine Lage beibehält und die Zugpunktlage unverändert ist, wenn jedoch aus einem anderen Grund, beispielsweise weil von einer Ebene in hängiges Gelände gefahren wurde, oder der Boden schwerer geworden ist, oder die Arbeitstiefe sich geändert hat, die Zugkraft ansteigt. Im selben Verhältnis steigen nicht nur die Widerstandskräfte aller Pflugkörper sowie die Unterlenkerkräfte, sondern auch die Anlagekraft der seitlichen Komponente der einzelnen Bodenkräfte. Dieser folgt auch an einen mittleren Pflugkörper oder einem sonstigen Pflugkörper, welcher keine direkte Anlage gegen den Boden bzw. die Ackerfurche hat und bei dem somit die an ihm wir-kenden, meßbaren Kräfte unbeeinflußt von einer Anlagekraft sind. Wenn somit die seitliche Komponente der Bodenkraft etwa proportional der Anlagekraft angestiegen ist, ist es auch möglich, die Anlagekraft zu regeln, wenn von der meßbaren Seitenkomponente eines Pflugkörpers ausgegangen ist, welcher keine Anlage gegen eine Ackerfurche hat, aber nicht der erste Pflugkörper des Pfluges ist. Somit ist es erfindungsgemäß auch möglich, mit nur einem Sensor an einem einzigen Pflugkörper eine entsprechende Messung der Anlagekraft vorzunehmen.

Im folgenden wird die Erfindung anhand von Ausführungsbeispielen in Verbindung mit der Zeichnung beschrieben. Dabei zeigt:
- Fig. 1: eine schematische Draufsicht auf ein Ausführungsbeispiel der Erfindung, wobei ein Schlepper und ein Pflug dargestellt sind,
- Fig. 2: eine schematische Ansicht eines hinteren Pflugkörpers und
- Fig. 3: eine Hinteransicht des in Figur 2 in der Draufsicht dargestellten hinteren Pflugkörpers.

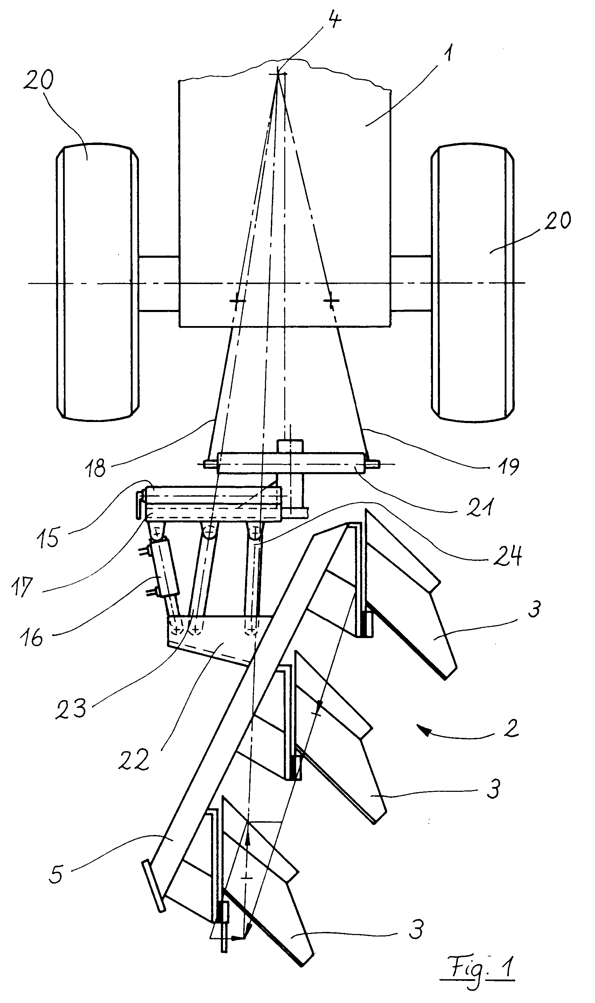

Der in Figur 1 in der Draufsicht dargestellte Schlepper 1 weist in üblicher Weise ein Fahrgestell auf, wobei zur Vereinfachung der Darstellung nur die Hinterräder 20 dargestellt sind. Am hinteren Bereich des Schleppers 1 sind zwei Unterlenker 18, 19 angelenkt, an welchen in üblicher Weise ein Dreipunktturm 21 gelagert ist. Der obere Lenker des Dreipunktturms 21 wurde nicht dargestellt. Die beiden Unterlenker 18 und 19 sind zueinander, in der Draufsicht, in einem Winkel geneigt, die ideellen Verlängerungen der Unterlenker 18 und 19 enden in einem Zugpunkt 4.

An dem Dreipunktturm 21 ist eine Anbaueinrichtung 15 befestigt, welche eine Kulisse 17 aufweist, mittels der die Schnittbreite eines Pfluges 2 verstellbar ist.

Der Pflug 2 umfaßt einen Pflugrahmen 5, an welche mehrere Pflugkörper 3 gelagert sind. Im einzelnen ist an dem Pflugrahmen 5 ein Träger 22 befestigt, welcher über zwei Lenker 23, 24 sowie einem längenveränderbaren Lenker 16, mit Hilfe dessen es möglich ist, die Lage des Pflugrahmens 5 zu verstellen.

In Figur 1 ist der Aufbau der erfindungsgemäßen Vorrichtung nur schematisch dargestellt, insbesondere wurde darauf verzichtet, die Regelungseinrichtung, insbesondere deren elektrische oder elektronische Elemente, im einzelnen darzustellen, da diese aus dem Stand der Technik bekannt sind.

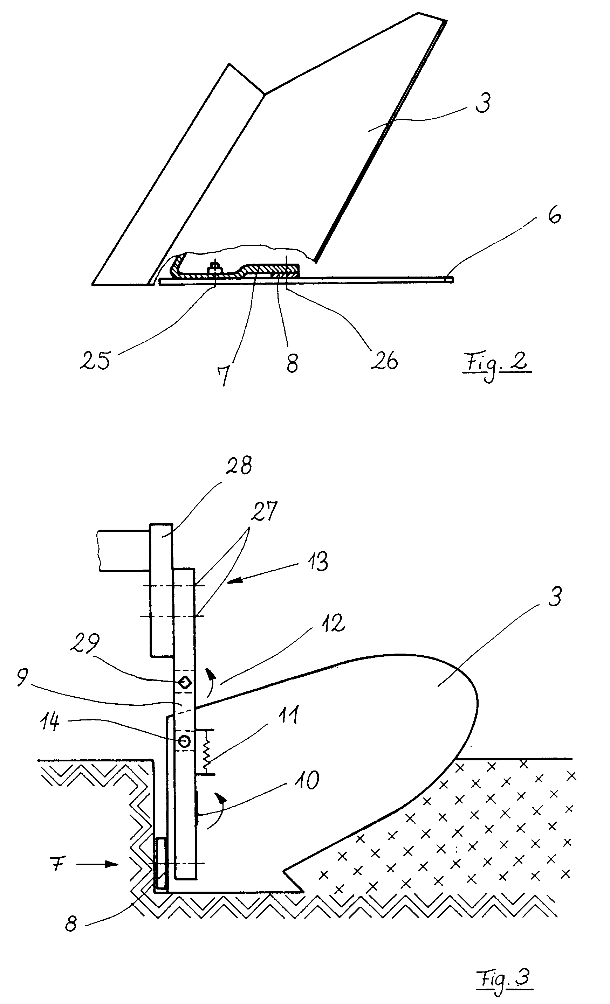

In der Figur 2 ist eine Ansicht des hinteren Pflugkörpers 3 dargestellt. Dieser ist über eine Pflugkörperbrust 7 mit einer Anlage 6 verbunden. Wie in Figur 2 gezeigt, kann die Pflugkörperbrust 7 über Schraubverbindungen 25, 26 mit der Anlage 6 verbunden sein.

Im Bereich der Schraubverbindung 26 ist ein Drucksensor 8 angeordnet, welcher beispielsweise in Form einer Piezo-Druckmeßdose ausgebildet sein kann. Es ist somit möglich, die Anlagekraft, welche auf den Pflugkörper 3 wirkt, direkt zu messen.

In Figur 3 ist eine Hinteransicht des in Figur 2 gezeigten Pflugkörpers dargestellt, wobei jeweils verschiedene Ausgestaltungsformen von Drucksensoren abgebildet sind. Im untersten Bereich ist in Figur 3 der in Figur 2 gezeigte Drucksensor 8 dargestellt, welcher in Form einer Piezo-Druckmeßdose ausgebildet ist. Der Pflugkörper ist mit einem Grindel 9 versehen, welche in ihrem mittleren Bereich mit einem Gelenk oder einem gelenkigen Bereich 14 versehen sein kann, und an ihrem oberen Bereich über Schraubverbindungen 27 mit einer Halterung 28 verbunden ist.

Im unteren Bereich des Grindels 9 ist in schematischer Weise ein Sensor 10 angeordnet, welcher in Form eines Dehnungsmeßsensors ausgebildet sein kann und Verformungen, d.h. Biegkräfte des Grindels mißt, um auf diese Weise die Größe der Anlagekraft F zu ermitteln.

Weiter oberhalb des Grindels 9 kann wahlweise ein Sensor 11 vorgesehen sein, welcher in Form einer Feder ausgebildet sein kann und einen gelenkigen Bereich der Grindel vorspannt. Auch dieser Sensor kann in Form eines Druckmeß-oder Dehnungsmeßsensors ausgebildet sein. Weiter oberhalb ist der Grindel bei den gezeigten Ausführungsbeispielen unterteilt und mittels eines profilierten Verbindungsbolzens oder Verbindungselementes 29 verbunden, welches ebenfalls als Sensor ausgebildet sein kann und durch Messung der Torsionskräfte zu einer Bestimmung der Kraft F dienen kann.

Erfindungsgemäß ist es weiterhin möglich, in den Befestigungsbereichen des Grindels 9 mit einer Halterung 28 einen weiteren Sensor 13 anzuordnen, über welchen Torsions- oder Biegekräfte meßbar sind, aus denen die Anlagekraft F berechnet werden kann.

Das in Figur 3 gezeigte Ausführungsbeispiel weist eine Vielzahl verschiedener Sensoren auf, die lediglich zum Zwecke der Verdeutlichung gemeinsam dargestellt sind. In dem praktischen Ausführungsbeispiel ist üblicherweise nur ein einzelner Sensor vorgesehen.

In Figur 1 ist in der Draufsicht an dem hintersten Pflugkörper 3 ein Kräftediagramm dargestellt, welches die seitlich wirkende Kraftkomponente der Anlagekraft, die Bodenkräfte und die daraus resultierende Kraftkomponente der Zugkraft darstellt. Aus dieser Darstellung ist ersichtlich, daß es in einfacher Weise möglich ist, in der beschriebenen Weise im Bereich eines oder mehrerer Pflugkörper die Gesamtkraft zu ermitteln und aus dieser die Anlagekraft zu bestimmen, welche der erfindungsgemäßen Regelung zugrunde gelegt werden soll.

## Patentansprüche

1. Vorrichtung zur Regelung der Lage des Zugpunktes eines einen Schlepper und einen Pflug umfassenden Gespanns, wobei beim Pflügen auftretende Kräfte über mindestens einen Sensor (8, 10 - 13) erfaßbar und zur Einstellung der Lage des Zugpunkts (4) des Pfluges (2) einer Regelungseinrichtung zuführbar sind, dadurch gekennzeichnet, daß die Anlagekraft zumindest eines Pflugkörpers (3) durch diese(n) Sensor(en) an der Furchenwand separat erfaßbar ist.

2. Vorrichtung nach Anspruch 1 , dadurch gekennzeichnet, daß der Sensor (8, 10 bis 13) im Bereich des hinteren mehrerer an einem Pflugrahmen (5) gelagerter Pflugkörper (3) angeordnet ist.

3. Vorrichtung nach Anspruch 2, dadurch gekennzeichnet, daß der Sensor in Form eins Drucksensors (8) ausgebildet ist, welcher im Bereich zwischen einer Anlage (6) und einer Pflugkörperbrust (7) angeordnet ist.

4. Vorrichtung nach Anspruch 2, dadurch gekennzeichnet, daß der Sensor in Form eines Dehnungsmeßsensors an einer Anlage (6) des Pflugkörpers (3) ausgebildet ist.

5. Vorrichtung nach Anspruch 1 oder 2, dadurch gekennzeichnet, daß der Sensor (10) am Grindel (9) eines Pflugkörpers (3) angeordnet und in Form eines Dehnungsmeßsensors ausgebildet ist.

6. Vorrichtung nach Anspruch 1 oder 2, dadurch gekennzeichnet, daß der Sensor (11) am Verbindungsbereich eines mehrteiligen Grindels (9) eines Pflugkörpers (3) angeordnet ist.

7. Vorrichtung nach Anspruch 1 oder 2, dadurch gekennzeichnet, daß der Sensor (12) an einem gelenkigen Bereich ( 14) eines mehrteiligen Grindels (9) eines Pflugkörpers (3) angeordnet ist.

8. Vorrichtung nach Anspruch 1 oder 2, dadurch gekennzeichnet , daß der Sensor (13) im Befestigungsbereich eines Grindels eines Pflugkörpers (3) an einer Anlage (6) angeordnet ist.

9. Vorrichtung nach einem der Ansprüche 1 bis 8, dadurch gekennzeichnet, daß die Einstellung der Lage des Zugpunktes (4) mittels zumindest eines den Pflugrahmen (5) mit einer Anbaueinrichtung (15) verbindenden, längenveränderbaren Lenkers (16) erfolgt.

10. Vorrichtung nach einem der Ansprüche 1 bis 9, dadurch gekennzeichnet, daß die Einstellung der Schnittbreite mittels einer im Bereich der Lagerung des Pfluges (2) an dem Schlepper (1) angeordneten Kulisse ( 17) erfolgt.

11. Vorrichtung nach einem der Ansprüche 9 oder 10, dadurch gekennzeichnet, daß die Einstellung über Hydraulikzylinder erfolgt.

12. Vorrichtung nach einem der Ansprüche 1 bis 11, dadurch gekennzeichnet, daß die Einstellung der Lage des Zugpunktes (4) auf einen vorgegebenen Sollwert mittels der Regelungseinrichtung vollautomatisch erfolgt.

13. Vorrichtung nach einem der Ansprüche 1 bis 12, dadurch gekennzeichnet, daß die Lage des Zugpunktes (4) am Fahrerstand des Schleppers (1) mittels einer Anzeigeeinrichtung angezeigt wird.

14. Vorrichtung nach einem der Ansprüche 1 bis 13, dadurch gekennzeichnet, daß die Regelungseinrichtung zur Umsteuerung bei einer Drehung eines Drehpflugs mit einem Drehsensor verbunden ist.

15. Verfahren zur Regelung der Lage des Zugpunktes eines einen Schlepper und einen Pflug umfassenden Gespanns, unter Verwendung der Vorrichtung nach einem der Ansprüche 1 bis 14, dadurch gekennzeichnet, daß die im Bereich mindestens eines Pflugkörpers (3) separat au der Furchenwand gemessene Anlagekraft durch Verstellung der in der Draufsicht verstellbaren Lage des Zugpunktes (4) des Pfluges (2) konstant auf einem vorgegebenen Wert gehalten wird.

16. Verfahren nach Anspruch 15, dadurch gekennzeichnet, daß die Anlagekraft des Pflugkörpers (3) gegen eine Furche direkt gemessen wird.

17. Verfahren nach Anspruch 15, dadurch gekennzeichnet, daß die Anlagekraft eines Pflugkörpers (3) gegen eine Furche aus der Seitenkomponente der an dem Pflugkörper (3) auftretenden Kräfte bestimmt wird.

18. Verfahren nach Anspruch 17, dadurch gekennzeichnet, daß die Seitenkomponente direkt gemessen wird.

19. Verfahren nach Anspruch 17, dadurch gekennzeichnet, daß die Seitenkomponente aus der Differenz aller an dem Pflugkörper (3) wirkenden Kräfte bestimmt wird.

20. Verfahren nach einem der Ansprüche 17 bis 19, dadurch gekennzeichnet, daß die Kraftmessung an einem mittleren mehrerer Pflugkörper (3) erfolgt.

## Claims

1. A device for controlling the position of the traction point of combined apparatus comprising a tractor and a plough, the forces occurring during ploughing being detectable by at least one sensor (8, 10 - 13) and being deliverable to a control device for adjustment of the position of the traction point (4) of the plough (2), **characterised in that** the bearing force of at least one plough base (3) on the furrow wall is separately detectable by means of the said sensor(s).

2. A device in accordance with claim 1, **characterised in that** the sensor (8, 10 to 13) is arranged in the region of the rearmost of a plurality of plough bases (3) mounted on a plough frame (5).

3. A device in accordance with claim 2, **characterised in that** the sensor is in the form of a pressure sensor (8) arranged in the region between a landside (6) and a plough base front (7).

4. A device in accordance with claim 2, **characterised in that** the sensor is in the form of an strain measurement sensor on a landside (6) of the plough base (3).

5. A device in accordance with claim 1 or 2, **characterised in that** the sensor (10) is arranged on the plough-beam (9) of a plough base (3) and is in the form of an strain measurement sensor.

6. A device in accordance with claim 1 or 2, **characterised in that** the sensor (11) is arranged in the region of connection of a multi-part plough-beam (9) of a plough base (3).

7. A device in accordance with claim 1 or 2, **characterised in that** the sensor (12) is arranged in an articulated region (14) of a multi-part plough-beam (9) of a plough base (3).

8. A device in accordance with claim 1 or 2, **characterised in that** the sensor (13) is arranged on a landside (6) in the region where a plough-beam of a plough base (3) is secured.

9. A device in accordance with one of claims 1 to 8, **characterised in that** adjustment of the position of the traction point (4) takes place by means of at least one guide arm (16) of adjustable length, connecting the plough frame (5) to a mounted device (15).

10. A device in accordance with one of claims 1 to 9, **characterised in that** adjustment of the cutting width takes place by means of a connecting member (17) arranged in the region where the plough (2) is mounted on the tractor (1).

11. A device in accordance with one of claims 9 or 10, **characterised in that** adjustment takes place by means of hydraulic cylinders.

12. A device in accordance with one of claims 1 to 11, **characterised in that** adjustment of the position of the traction point (4) takes place fully automatically by means of the control device on the basis of a pre-determined theoretical value.

13. A device in accordance with one of claims 1 to 12, **characterised in that** the position of the traction point (4) is indicated on the driver's position of the tractor (1) by means of an indicating device.

14. A device in accordance with one of claims 1 to 13, **characterised in that** the control device is connected to a rotary sensor for reversal upon turning of a turnover plough.

15. A process for controlling the position of the traction point of combined apparatus comprising a tractor and a plough, using the device in accordance with one of claims 1 to 14, **characterised in that** the bearing force on the furrow wall, measured separately in the region of at least one plough base (3), is kept constant at a pre-determined value by adjustment of the position of the traction point (4) of the plough (2), the said position being adjustable in plan view.

16. A process in accordance with claim 15, **characterised in that** the bearing force of the plough base (3) against a furrow is measured directly.

17. A process in accordance with claim 15, **characterised in that** the bearing force of a plough base (3) against a furrow is determined from the side components of the forces occurring on the plough base (3).

18. A process in accordance with claim 17, **characterised in that** the side components are measured directly.

19. A process in accordance with claim 17, **characterised in that** the side components are determined from the differential of all the forces acting on the plough base (3).

20. A process in accordance with one of claims 17 to 19, **characterised in that** the measurement of force takes place on the central one of a plurality of plough bases (3).

## Revendications

1. Dispositif pour régler la position du point de traction d'un attelage comportant un tracteur et une charrue, dans lequel les forces agissant lors du labourage peuvent être mesurées au moyen d'un capteur (8, 10, 13) et ces données peuvent être envoyées à un dispositif de réglage destiné à régler la position du point de traction (4) de la charrue (2), caractérisé en ce que la force d'appui d'au moins un corps de charrue (3) sur la paroi du sillon peut être mesurée séparément par ce ou ces capteurs.

2. Dispositif suivant la revendication 1, caractérisé en ce que le capteur (8,10 à 13) est disposé dans la zone du corps de charrue (3) situé à l'arrière de plusieurs autres sur un cadre de charrue (5).

3. Dispositif suivant la revendication 2, caractérisé en ce que le capteur est réalisé sous la forme d'un capteur de pression (8), disposé dans la zone située entre un contresep (6) et un bouclier (7) de corps de charrue.

4. Dispositif suivant la revendication 2, caractérisé en ce que le capteur est réalisé sous la forme d'un extensomètre sur un contresep (6) du corps de charrue (3).

5. Dispositif suivant la revendication 1 ou la revendication 2, caractérisé en ce que le capteur (10) est disposé sur le timon (9) d'un corps de charrue (3) et est réalisé sous la forme d'un extensomètre.

6. Dispositif suivant la revendication 1 ou la revendication 2, caractérisé en ce que le capteur (11) est disposé dans la zone de raccordement d'un timon en plusieurs parties (9) d'un corps de charrue (3).

7. Dispositif suivant la revendication 1 ou la revendication 2, caractérisé en ce que le capteur (12) est disposé dans une zone d'articulation (14) d'un timon en plusieurs parties (9) d'un corps de charrue (3).

8. Dispositif suivant la revendication 1 ou la revendication 2, caractérisé en ce que le capteur (13) est disposé, dans une zone de fixation d'un timon (9) d'un corps de charrue (3) à un contresep (6).

9. Dispositif suivant l'une quelconque des revendications 1 à 8, caractérisé en ce que le réglage de la position du point de traction (4) se fait au moyen d'au moins un bras de liaison (16) de longueur réglable, reliant le cadre de charrue (5) à un dispositif d'adaptation (15).

10. Dispositif suivant l'une quelconque des revendications 1 à 9, caractérisé en ce que le réglage de la largeur de sillon se fait au moyen d'un coulisseau (17) disposé dans la zone de montage de la charrue (2) sur le tracteur (1).

11. Dispositif suivant l'une des revendication 9 ou 10, caractérisé en ce que le réglage se fait par vérin hydraulique.

12. Dispositif suivant l'une quelconque des revendications 1 à 11, caractérisé en ce que le réglage de la position du point de traction (4) à une valeur de consigne se fait, de façon complètement automatique, au moyen du dispositif de réglage.

13. Dispositif suivant l'une quelconque des revendications 1 à 12, caractérisé en ce que la position du point de traction est indiquée sur le tableau de bord du tracteur (1) au moyen d'un dispositif indicateur.

14. Dispositif suivant l'une quelconque des revendications 1 à 13, caractérisé en ce que le dispositif de réglage est relié à un capteur de rotation pour commander le changement de réglage lors d'un pivotement d'une charrue à retournement (brabant).

15. Procédé pour régler la position du point de traction d'un attelage comportant un tracteur et une charrue, en utilisant un dispositif suivant l'une quelconque des revendications 1 à 14, caractérisé en ce que la force d'appui sur la paroi du sillon, mesurée séparément dans la zone d'au moins l'un des corps de charrue (3) est maintenue constante à une valeur déterminée au préalable, en déplaçant la position du point de traction de la charrue (2), ce point étant mobile dans la vue en plan.

16. Procédé suivant la revendication 15, caractérisé en ce que la force d'appui du corps de charrue (3) contre un sillon est mesurée directement.

17. Procédé suivant la revendication 15, caractérisé en ce que la force d'appui du corps de charrue (3) contre un sillon est déterminée à partir de la composante latérale des forces agissant sur le corps de charrue (3).

18. Procédé suivant la revendication 17, caractérisé en ce que la composante latérale est mesurée directement.

19. Procédé suivant la revendication 17, caractérisé en ce que la composante latérale est déterminée à partir de la différence de toutes les forces agissant sur le corps de charrue (3).

20. Procédé suivant l'une quelconque des revendications 17 à 19, caractérisé en ce que la mesure de force se fait sur un corps de charrue (3) situé au milieu de plusieurs corps de charrue.
